# FASCICULE DE BREVET EUROPEEN

(11) **EP 3 952 174 B1**
(45) Date de publication et mention de la délivrance du brevet: **08.05.2024**
(21) Numéro de dépôt: 21189191.6
(22) Date de dépôt: 02.08.2021
(51) Int. Cl.: H04L 1/18, H04L 1/06

(54) **MÉTHODE DE TRANSMISSION ROBUSTE D'ÉCHANTILLONS DE SIGNAUX NUMÉRISÉS DANS UN SYSTÈME DE COMMUNICATIONS RF**
VERFAHREN ZUR ROBUSTEN ÜBERTRAGUNG VON DIGITALISIERTEN SIGNALABTASTWERTEN IN EINEM FUNKFREQUENZ-KOMMUNIKATIONSSYSTEM
METHOD FOR ROBUST TRANSMISSION OF SAMPLES OF DIGITISED SIGNALS IN AN RF COMMUNICATION SYSTEM

(30) Priorité: 06.08.2020 FR 2008323
(43) Date de publication de la demande: 09.02.2022
(73) Titulaire: THALES, 92400 Courbevoie (FR)
(72) Inventeur: ARNAL, Fabrice, 31100 TOULOUSE (FR); VAN WAMBEKE, Nicolas, 31100 TOULOUSE (FR); ROGNANT, Pierre, 31100 TOULOUSE (FR)
(74) Mandataire: Atout PI Laplace

(56) Documents cités:
- US-A1- 2010 046 520
- VINNAKOTA VENU BALAJI ET AL: "An Experimental Study of C-RAN Fronthaul Workload Characteristics: Protocol Choice and Impact on Network Performance", 2019 IEEE 89TH VEHICULAR TECHNOLOGY CONFERENCE (VTC2019-SPRING), IEEE, 28 avril 2019 (2019-04-28), pages 1-7, XP033568053, DOI: 10.1109/VTCSPRING.2019.8746288
- Anonymous: "Transmission Control Protocol - Wikipedia", , 28 novembre 2017 (2017-11-28), XP055642012, Extrait de l'Internet: URL:https://en.wikipedia.org/w/index.php?t itle=Transmission_Control_Protocol&oldid=8 12597098 [extrait le 2019-11-13]
- MOUNTASER GHIZLANE ET AL: "Reliable and Low-Latency Fronthaul for Tactile Internet Applications", IEEE JOURNAL ON SELECTED AREAS IN COMMUNICATIONS, IEEE SERVICE CENTER, PISCATAWAY, US, vol. 36, no. 11, 1 novembre 2018 (2018-11-01), pages 2455-2463, XP011702061, ISSN: 0733-8716, DOI: 10.1109/JSAC.2018.2872299 [extrait le 2018-11-30]
- YANG QIANMEI ET AL: "A switching architecture for remote radio head protection in cloud radio access networks", 2017 INTERNATIONAL TOPICAL MEETING ON MICROWAVE PHOTONICS (MWP), IEEE, 23 octobre 2017 (2017-10-23), pages 1-3, XP033263503, DOI: 10.1109/MWP.2017.8168666 [extrait le 2017-12-05]

## Description

### Domaine technique :

L'invention se situe dans le domaine des télécommunications radiofréquences (RF), et porte plus particulièrement sur une méthode de transmission des échantillons d'un signal numérisé entre un équipement générant les échantillons d'un signal à émettre et l'équipement en charge de son émission.

### Technique antérieure :

L'invention trouve son application lorsque l'équipement en charge de générer les échantillons d'un signal à émettre est distinct voire déporté par rapport à l'équipement en charge de son émission effective. C'est le cas par exemple pour les communications par satellite dans les bandes de fréquences présentant des risques élevés d'affaiblissement du signal (par exemple, la bande Ka, sensible aux conditions météorologiques), où le lieu d'émission du signal peut être amené à changer afin de s'affranchir de difficultés de transmission, ou lorsqu'un équipement fonctionnant en bande de base centralise les émissions réalisées par une ou plusieurs stations d'émission, comme c'est de plus en plus le cas par exemple dans les réseaux d'opérateurs de télécommunications mobiles.

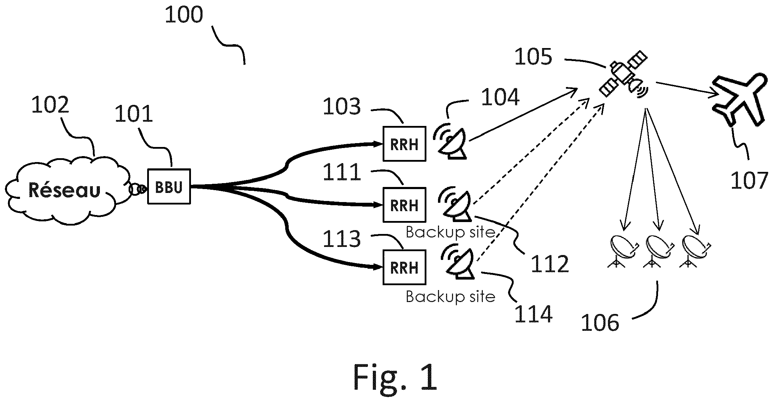

La figure 1 illustre par un exemple le principe de génération et d'émission d'un signal RF dans un réseau de communications par satellite 100 selon l'état de l'art.

Dans le sens de la voie montante (c'est-à-dire pour l'envoi de données par le BBU dans le réseau de communications à travers le satellite), un équipement 101, couramment désigné sous l'acronyme de BBU (sigle anglais pour *Base Band Unit* ou unité bande de base) est en charge de la génération des signaux à transmettre sous la forme d'une suite d'échantillons modulés en bande de base, en phase et en quadrature de phase, nommés échantillons I/Q. Les informations à transmettre peuvent être générées directement par le BBU 101, ou être récupérées depuis un équipement tiers à travers un réseau 102 quelconque positionné en amont du BBU. Le BBU réalise les opérations de codage et de modulation en bande de base des informations à transmettre. Les échantillons I/Q modulés par le BBU 101 sont transmis à un équipement 103 connu sous l'acronyme de RRH (sigle anglais pour *Remote Radio Head,* ou tête radio déportée) ou RRU (sigle anglais pour *Remote Radio Unit,* ou unité radio déportée), par le biais d'un système de liaison de données numérique, tel qu'un réseau Ethernet, IP ou autre, et pour n'importe quel type de support physique (cuivre, coaxial, radio, fibre optique sur un lien dédié, etc.) satisfaisant les contraintes de débits du flux à transporter. Le RRH prend comme entrées les échantillons I/Q numériques envoyés par le BBU, et les transforme en un signal analogique radiofréquence sur fréquence porteuse. Le RRH envoie ce signal RF analogique sur la voie air à un satellite géostationnaire 105 ou à une constellation de satellites en orbite basse ou moyenne, à travers une antenne satellitaire 104. Le signal est ensuite réémis par le satellite, et récupéré par différents équipements, tels que par exemple des terminaux satellitaires fixes 106 ou mobiles 107 embarqués par exemple sur des plateformes aéroportées ou terrestres.

Dans le sens de la voie descendante (c'est-à-dire pour la réception de données par le BBU depuis le satellite), le RRH 103 reçoit des signaux RF analogiques sur fréquence porteuse transmis par le satellite 105, les transpose en bande de base, puis les convertit en échantillons I/Q numériques qui sont envoyés au BBU 101. Le BBU démodule et décode les échantillons pour en extraire les informations binaires utiles qu'ils transportent. Ces informations utiles sont soit exploitées par le BBU, ou transmises à un équipement tiers à travers le réseau 102, par exemple sous la forme de datagrammes IP.

De manière à se prémunir des problèmes de disponibilité de la transmission, pouvant provenir de disfonctionnements de la liaison entre le BBU et le RRH, d'une panne du RRH et/ou de disfonctionnements de la liaison entre le RRH et le satellite 105 pour cause, par exemple, de conditions météorologiques défavorables, le RRH peut être suppléé par les RRH 111 et 113 respectivement reliés aux antennes satellitaires 112 et 114. Les emplacements des RRH peuvent être très éloignés, de manière à bénéficier de conditions météorologiques différentes. Cette redondance permet de changer de RRH lorsque la liaison depuis l'une d'elle est défaillante.

Dans les réseaux satellitaires de l'état de l'art, les changements de RRH sont faits manuellement par un opérateur, en réponse par exemple à une dégradation des conditions météorologiques sur le RRH actif, ou automatiquement par le BBU lorsqu'il est informé de ce que la transmission en cours n'est pas correctement réalisée. Cependant, lorsque des problèmes de transmission des données entre BBU et RRH apparaissent, la réactivité de la boucle de contrôle est au minimum de l'ordre de plusieurs dizaines de millisecondes voire beaucoup plus, durant lesquelles les échantillons I/Q n'ayant pas été correctement acheminés sont perdus.

Les solutions de l'état de l'art ne sont donc pas adaptées pour les communications requérant une maitrise de la latence de transmission et une forte intégrité des données en cas de panne d'un équipement RRH. L'objet de l'invention est de proposer une solution qui réponde à ce problème. Cette solution s'applique par exemple aux communications par satellite pour applications sécuritaires lorsque la perte d'information au cours de la transmission peut avoir des conséquences importantes sur la mission dont la communication est le support, comme par exemple le contrôle et la commande de drones 107. La solution s'applique également aux communications par satellite pour applications grand public où la maitrise de la latence est importante, comme les réseaux d'accès satellitaires pour opérateurs de télécommunications (en particulier, la latence subie sur la liaison satellite peut avoir une incidence directe sur le débit constaté par les utilisateurs, en raison des fonctionnements particuliers des protocoles réseau mis en oeuvre de bout en bout, comme notamment TCP/IP). Compte tenu des évolutions à venir, et notamment de la mise en service de constellations et de systèmes de satellites de télécommunications à très hauts débits (systèmes VHTS), les segments sol sont amenés à évoluer vers un nombre de passerelles nécessairement élevé compte tenu de la nécessité de réutiliser la ressource radio pour le lien entre passerelles et satellites. Cela implique une augmentation significative du nombre de BBU/RRH, et un besoin de performances et de reconfigurabilité sur les liaisons entre ces équipements. L'invention permet de réduire l'impact en termes de coût et de service pour les aspects de redondance et de tolérance aux pannes de tous ces systèmes.

L'article de Vinnakota Venu Balaji et al., « An experimental study of C-RAN fronthaul workload characteristics : protocol choice and impact on network performances», IEEE 89th vehicular technology conférence, 28 avril 2019, décrit un dispositif dans lequel un RRH et un BBU échangent des paquets d'échantillons IQ selon le protocole réseau TCP. Cette solution pose cependant le problème que dans TCP, la fiabilisation par retransmissions est indissociable du contrôle de congestion, c'est-à-dire d'une régulation du débit afin de ne pas saturer les ressources du réseau. Par nature le débit TCP varie en permanence et le délai bout en bout associé varie également, ce qui ne convient pas lorsqu'il est nécessaire d'avoir un débit et une latence stables (ce qui est le cas par exemple pour les liaisons par satellite).

L'invention s'applique également à l'ensemble des communications RF lorsqu'elles sont réalisées à partir d'une information numérique conduisant à la génération d'échantillons de signal numériques I/Q véhiculés vers un ou plusieurs équipements potentiellement distants dédiés à leur transmission sous la forme d'un signal RF sur la voie air, comme c'est le cas par exemple pour les réseaux mobiles cellulaires de cinquième génération (5G). En effet, là aussi, le déploiement massif d'équipements pour les réseaux mobiles cellulaires de cinquième génération est amené à requérir la mise en oeuvre de méthodes de communication flexibles et intègres pour assurer les transmissions entre BBU et RRH.

Différents protocoles de transmission ont été développés par les constructeurs de réseau mobiles afin d'organiser et de normaliser la transmission de données sur le lien de communications numérique reliant le BBU au(x) RRH(s). Les plus connus sont les protocoles CPRI (sigle anglais pour *Common Public Radio Interface*)*,* eCPRI (sigle anglais pour *enhanced CPRI*), OBSAI (acronyme anglais pour *Open Base Station Architecture Initiative*) ou NGFI (sigle anglais pour *Next Génération Fronthaul Interface*). Suivant les protocoles, des désignations différentes peuvent être utilisées pour les équipements (exemple, dans le protocole eCPRI, les BBU sont désignés par l'acronyme REC (*Radio Equipment Control* en anglais, ou équipement de contrôle radio) et les RRH sont des RE (sigle anglais pour *Radio Equipment,* ou équipement radio). Ces protocoles n'apportent cependant pas de réponse aux problèmes de perte de paquets et de latence de réémission, qui ont lieu lorsque la liaison de données entre BBU et RRH est partiellement voire totalement défaillante.

Un objet de l'invention est donc de proposer un procédé permettant de diminuer au maximum le temps d'indisponibilité du service de transmission de données lorsque la liaison entre l'équipement en charge de la génération des échantillons I/Q en bande de base et l'équipement en charge de la transmission du signal correspondant sur la voie air est défaillante.

### Résumé de l'invention :

A cet effet, la présente invention décrit un procédé de transmission de données dans un système de communications radiofréquence comprenant :
- au moins un équipement comprenant une mémoire, dit BBU, configuré pour générer des échantillons numériques en phase et en quadrature de phase, dits échantillons I/Q, à partir de données à émettre, et pour extraire des données utiles d'échantillons I/Q,
- une pluralité d'équipements comprenant une mémoire, dits RRH, configurés pour générer et transmettre un signal analogique RF à partir d'échantillons I/Q, et pour générer des échantillons I/Q à partir d'un signal analogique RF reçu,
- des liens de communication numérique pour la transmission des échantillons I/Q entre le ou les BBU et les RRH.

Dans le procédé selon l'invention, chaque BBU est configuré pour envoyer des données dans le réseau de télécommunications à travers un des RRH et pour recevoir des données du réseau de télécommunications depuis un des RRH. Le procédé a cela de particulier que le ou les BBU et les RRH sont configurés pour échanger des échantillons I/Q organisés sous la forme de paquets d'échantillons I/Q marqués par un identifiant de séquence, et pour mettre en oeuvre un mécanisme d'acquittement des paquets d'échantillons I/Q qu'ils échangent. Le RRH destinataire des paquets d'échantillons I/Q émis par chaque BBU est modifié en fonction de l'état des acquittements des paquets d'échantillons I/Q.

Avantageusement, BBU et RRH sont configurés pour protéger les paquets d'échantillons I/Q qu'ils échangent par un code correcteur d'erreurs.

Selon un mode de réalisation de l'invention, l'envoi de données dans le réseau de télécommunications comprend :
- une première étape au cours de laquelle un BBU stocke en mémoire et envoie un ou plusieurs paquets d'échantillons I/Q correspondant aux données à émettre à un premier RRH,
- une deuxième étape au cours de laquelle le premier RRH acquitte la réception du ou des paquets d'échantillons I/Q auprès du BBU par au moins un mécanisme d'acquittement parmi un mécanisme d'acquittement positif et un mécanisme d'acquittement négatif,
- une troisième étape au cours de laquelle le premier RRH génère et envoie un signal analogique RF correspondant aux paquets d'échantillons I/Q correctement reçus,
- une quatrième étape au cours de laquelle le BBU supprime de sa mémoire ou réémet le ou les paquets d'échantillons I/Q envoyés lors de la première étape du procédé en fonction des acquittements reçus du RRH suite à la deuxième étape du procédé.

Lorsque le mécanisme d'acquittement mis en oeuvre comprend un mécanisme d'acquittement positif :
- la deuxième étape comprend la transmission, par le premier RRH au BBU, d'un message d'acquittement ACK lors de la réception correcte d'un ou plusieurs paquets d'échantillons I/Q, le message d'acquittement comprenant l'identifiant de séquence du ou des paquets d'échantillons I/Q,
- la quatrième étape comprend la suppression, par le BBU, des paquets d'échantillons I/Q stockés en mémoire correspondants aux messages d'acquittement ACK reçus, et la réémission des paquets d'échantillons I/Q stockés en mémoire pour lesquels aucun message d'acquittement ACK n'est reçu après une durée donnée.

Lorsque le mécanisme d'acquittement mis en oeuvre comprend un mécanisme d'acquittement négatif :
- la deuxième étape comprend la transmission, par le premier RRH au BBU, d'un message d'acquittement négatif NACK lorsqu'un paquet d'échantillons I/Q est erroné ou manquant, le message d'acquittement négatif NACK comprenant l'identifiant de séquence du paquet d'échantillons I/Q,
- la quatrième étape comprend la suppression, par le BBU, des paquets d'échantillons I/Q stockés en mémoire pour lesquels aucun message d'acquittement négatif NACK n'est reçu après une durée donnée, et la réémission des paquets d'échantillons I/Q pour lesquels un message d'acquittement négatif NACK est reçu.

Avantageusement, lorsque le nombre de paquets non acquittés ou le nombre de paquets acquittés négativement lors de la quatrième étape est supérieur à un seuil sur une période donnée, la réémission d'un paquet d'échantillons I/Q et les transmissions ultérieures sont réalisées auprès d'un deuxième RRH.

Selon un mode de réalisation de l'invention, la réception de données depuis le réseau de communications comprend :
- une première étape au cours de laquelle un RRH recevant un signal analogique RF génère, stocke en mémoire et envoie à un BBU un ou plusieurs paquets d'échantillons I/Q correspondants,
- une deuxième étape au cours de laquelle le BBU acquitte la réception du ou des paquets d'échantillons I/Q auprès du RRH par au moins un mécanisme d'acquittement parmi un mécanisme d'acquittement positif et un mécanisme d'acquittement négatif,
- une troisième étape au cours de laquelle le BBU extrait des données des paquets d'échantillons I/Q correctement reçus, et
- une quatrième étape au cours de laquelle le RRH supprime de sa mémoire ou réémet le ou les paquets d'échantillons I/Q envoyés lors de la première étape du procédé en fonction des acquittements reçus du BBU suite à la deuxième étape du procédé.

Lorsque le mécanisme d'acquittement mis en oeuvre comprend un mécanisme d'acquittement positif :
- la deuxième étape comprend la transmission, par le BBU au RRH, d'un message d'acquittement ACK lors de la réception correcte d'un ou plusieurs paquets d'échantillons I/Q, le message d'acquittement comprenant l'identifiant de séquence du ou des paquets d'échantillons I/Q,
- la quatrième étape comprend la suppression, par le RRH, des paquets d'échantillons I/Q stockés en mémoire correspondants aux messages d'acquittement ACK reçus, et la réémission des paquets d'échantillons I/Q stockés en mémoire pour lesquels aucun message d'acquittement ACK n'est reçu après une durée donnée.

Lorsque le mécanisme d'acquittement mis en oeuvre comprend un mécanisme d'acquittement négatif :
- la deuxième étape comprend la transmission, par le BBU au RRH, d'un message d'acquittement négatif NACK lorsqu'un paquet d'échantillons I/Q est erroné ou manquant, le message d'acquittement négatif NACK comprenant l'identifiant de séquence du paquet d'échantillons I/Q,
- la quatrième étape comprend la suppression, par le RRH, des paquets d'échantillons I/Q stockés en mémoire pour lesquels aucun message d'acquittement négatif NACK n'est reçu après une durée donnée, et la réémission des paquets d'échantillons I/Q pour lesquels un message d'acquittement négatif NACK est reçu.

Avantageusement, lors de la quatrième étape, la réémission d'un paquet d'échantillons I/Q est réalisée par un autre lien de communication numérique.

Selon un mode de réalisation, le système de communications RF comprend en outre un équipement de supervision des BBU et RRH configuré pour associer RRH et BBU pour la transmission de données. Avantageusement, l'équipement de supervision supervise les files d'attentes du ou des BBU et des RRH.

Selon un mode de réalisation, le lien de communication numérique pour la transmission des paquets d'échantillons I/Q entre BBU et RRH utilise un protocole de communication parmi les standards CPRI, eCPRI, OBSAI et NGFI. Avantageusement, le protocole de communication utilisé est le protocole eCPRI dont le champ « *eCPRI Message Type* » est utilisé pour identifier les paquets d'échantillons I/Q.

Selon un mode de réalisation, les liens de communications numériques entre BBU et RRH ou entre RRH et BBU sont à débit constant.

L'invention porte également sur un système de communications radiofréquence comprenant :
- au moins un équipement comprenant une mémoire, dit BBU, configuré pour générer des échantillons numériques en phase et en quadrature de phase, dits échantillons I/Q, à partir de données à émettre, et pour reconstituer des données reçues à partir d'échantillons I/Q,
- une pluralité d'équipements comprenant une mémoire, dits RRH, configurés pour générer et transmettre un signal analogique RF à partir d'échantillons I/Q, et pour générer des échantillons I/Q à partir d'un signal analogique RF reçu,
- des liens de communication numérique pour la transmission des échantillons I/Q entre le ou les BBU et les RRH.

Dans le système de communications RF selon l'invention, chaque BBU est configuré pour envoyer des données dans le réseau de télécommunications à travers un des RRH et pour recevoir des données du réseau de télécommunications depuis un des RRH. Le procédé a cela de particulier que le ou les BBU et les RRH sont configurés pour échanger des échantillons I/Q organisés sous la forme de paquets d'échantillons I/Q marqués par un identifiant de séquence, et pour mettre en oeuvre un mécanisme d'acquittement des paquets qu'ils échangent. Le RRH destinataire des paquets d'échantillons I/Q émis par chaque BBU est modifié en fonction de l'état des acquittements des paquets d'échantillons I/Q.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
La figure 1 illustre par un exemple le principe de génération et d'émission d'un signal RF dans un réseau de communications par satellite selon l'état de l'art.
La figure 2 représente un système de communications dans lequel s'inscrit le procédé de transmission de données selon un mode de réalisation de l'invention.
La figure 3 représente les différentes étapes d'un procédé de transmission de données selon un mode de réalisation de l'invention, dans le sens montant.
La figure 4 représente schématiquement une mise en oeuvre du procédé de transmission de données entre BBU et RRH selon un mode de réalisation de l'invention.
La figure 5 représente les différentes étapes d'un procédé de transmission de données selon un mode de réalisation de l'invention, dans le sens descendant.
La figure 6 représente un mode de réalisation d'un système de communications dans lequel s'inscrit le procédé de transmission de données selon un mode de réalisation de l'invention.
La figure 7 illustre différentes parties des paquets de données utilisant le protocole eCPRI pouvant être utilisées pour identifier des paquets d'échantillons I/Q transmis entre BBU et RRH.

Des références identiques sont utilisées dans des figures différentes lorsqu'elles désignent des éléments identiques ou comparables.

### Description détaillée :

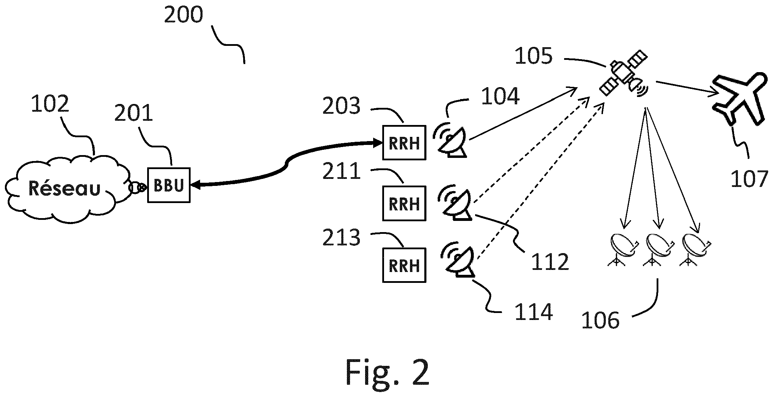

La figure 2 représente un système de communications dans lequel s'inscrit le procédé de transmission de données selon un mode de réalisation de l'invention, dans le sens de la liaison montante.

Le procédé de transmissions de données selon l'invention est représenté et décrit ici dans le contexte d'un réseau de communication par satellites tel que celui représenté à la figure 2, mais s'appliquent à n'importe quel réseau de communications RF dans lequel l'équipement où sont générés les échantillons I/Q numériques à transmettre et l'équipement réalisant leur transmission effective sous la forme d'un signal RF sont différents.

Le système de communications 200 comprend :
- au moins un équipement comprenant une mémoire, dit BBU 201, en charge de la génération d'échantillons numériques en phase et en quadrature de phase, dits échantillons I/Q, à partir de données à émettre et de l'extraction de données utiles d'une suite d'échantillons I/Q,
- au moins deux équipements comprenant chacun une mémoire, dit RRH 203, 211 et 213, en charge de la génération d'un signal analogique radiofréquence à partir d'échantillons I/Q reçus depuis un BBU puis de sa transmission et inversement, et
- des liens de communication numériques pour la transmission des échantillons I/Q entre le ou les BBU et les RRH, par exemple un réseau Ethernet, un réseau IP ou un lien de communications dédié tel qu'un lien en fibre optique. Les BBU ne sont pas nécessairement reliés à tous les RRH, et inversement.

Pour augmenter leur fiabilité, chaque équipement peut être localement redondé.

Un RRH « actif » est associé à chaque BBU, qui est le RRH utilisé pour émettre les données de la BBU ou pour recevoir les signaux RF d'où la BBU extrait les données utiles. Pour cela, les BBU ont généralement une liste des RRH associées à un ordre de préférence préétabli de façon opérationnelle par rapport à des considérations diverses telles que leur proximité, leur coût d'utilisation ou autre. Sur la base de cet ordre de préférence préétabli, la BBU choisit le RRH actif selon les critères connus en temps réel, comme par exemple la disponibilité effective des liens terrestres et/ou les données météorologiques connues propres à la zone géographique où est installée chaque RRH, afin d'anticiper la disponibilité et/ou le débit accessible sur les liaisons RF satellite.

Dans le sens montant, le BBU 201 est configuré pour réaliser le conditionnement du flux d'informations numériques à transmettre sous la forme de données de quantification de l'amplitude du signal sur les voies en phase et en quadrature de phase (échantillons I/Q). Il comprend des moyens de calcul et une mémoire configurée pour mémoriser les paquets d'échantillons I/Q générés ou les paquets de données IP ou Ethernet comprenant ces paquets d'échantillons I/Q. Egalement, plusieurs BBU peuvent être implémentés en parallèle dans le même système.

Le RRH 202, 203 et 211 comprend une chaîne radiofréquence configurée pour produire et émettre sur la voie air un signal RF analogique sur fréquence porteuse à partir d'échantillons I/Q numériques en bande de base. Le RRH comprend donc au minimum un convertisseur numérique vers analogique, une fonction de transposition de fréquence, et un amplificateur de puissance.

L'invention consiste en un procédé organisant les transmissions entre BBU et RRH en donnant un rôle actif aux RRH, contrairement aux systèmes de communication de l'état de l'art. Pour cela, le BBU organise les échantillons I/Q à émettre sous la forme de paquets d'échantillons I/Q associés à un identifiant de séquence. Les paquets d'échantillons I/Q sont conditionnés de manière à pouvoir être directement transformés en un signal RF analogique, c'est-à-dire que les échantillons I/Q comprennent, en plus des informations utiles à transmettre, toutes les informations de signalisation requises (séquences pilotes, préfixes si nécessaire, etc...), et forment un nombre entier de symboles à émettre. Ces paquets d'échantillons I/Q sont mémorisés et encapsulés dans des paquets de données de réseau.

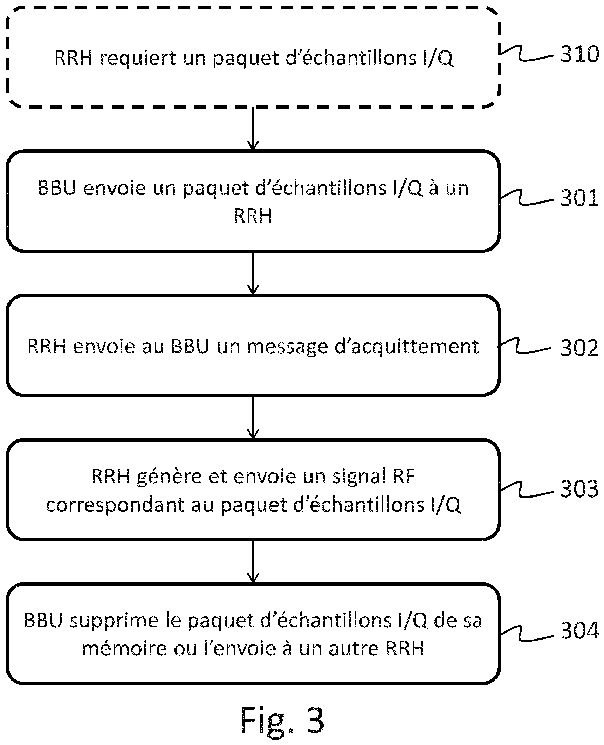

La figure 3 représente les différentes étapes d'un procédé de transmission de données selon un mode de réalisation de l'invention, dans le sens de la liaison montante.

Il comprend une première étape 301, au cours de laquelle le BBU envoie au RRH actif au moins un paquet d'échantillons I/Q, chaque paquet d'échantillons étant associé à un identifiant de séquence. Avantageusement, les identifiants de séquence sont déterministes, par exemple en utilisant un identifiant incrémental, pour permettre au RRH de détecter les pertes de paquets à partir des séquences d'identifiants reçus. Comme détaillé par la suite, les paquets perdus sont retransmis, et gardent dans ce cas leur identifiant de séquence initial.

De manière alternative, la première étape 301 du procédé peut être précédée par une étape préliminaire 310 au cours de laquelle le BBU expose sa file d'attente aux RRH, via par exemple un réseau de collecte (en anglais *Backhaul Network*). Lorsque le BBU a des données à émettre, le RRH actif le voit dans la file d'attente, et envoie une requête de transmission d'échantillons I/Q auquel le BBU répond par des paquets d'échantillons I/Q. Cette étape permet au BBU de s'assurer que la liaison de données avec le RRH et le RRH lui-même sont opérationnels avant d'envoyer des données.

Le procédé de transmission selon un mode de réalisation de l'invention comprend une deuxième étape 302, au cours de laquelle le RRH acquitte les paquets de données. Selon le mode de réalisation, le mécanisme d'acquittement mis en oeuvre peut être un mécanisme d'acquittement positif, où le RRH envoie au BBU un message d'acquittement ACK dès lors qu'un paquet d'échantillons I/Q est correctement reçu, le message d'acquittement ACK comprenant l'identifiant de séquence associé au paquet d'échantillons I/Q reçu. De manière alternative, le mécanisme d'acquittement mis en oeuvre peut être un mécanisme d'acquittement négatif dans lequel un message d'acquittement négatif NACK est transmis lors de la détection d'un paquet d'échantillons I/Q erroné ou manquant, un paquet manquant pouvant être détecté en suivant l'évolution des identifiants déterministes des paquets d'échantillons I/Q reçus ou lorsqu'un paquet dont la retransmission est attendue n'est pas reçu après une durée donnée, ou en cas de défaillance de la chaîne radio du RRH. L'identifiant du ou des paquets erronés ou manquants sont transmis dans le message NACK.

La mise en oeuvre d'un mécanisme d'acquittement négatif est plus efficace que la mise en oeuvre d'un acquittement positif en ce qui concerne la quantité de données échangées et la réactivité, mais ne permet pas de détecter les pannes éventuelles du lien de communications entre BBU et RRH, ce que permet de faire l'acquittement positif. Les deux mécanismes peuvent être implémentés ensemble.

Avantageusement, les messages d'acquittement (positif et/ou négatifs) peuvent être regroupés de manière à acquitter plusieurs paquets d'échantillons I/Q à la fois, ce qui permet de limiter les échanges en RRH et BBU (approche de type acquittement sélectif ou *Selective ACKnowledgment* (SACK) en anglais).

Le procédé de transmission selon un mode de réalisation de l'invention comprend une troisième étape 303, au cours de laquelle le RRH génère le signal RF analogique correspondant aux paquets d'échantillons I/Q correctement reçus, et l'envoie sur la voie air vers le satellite (ou le terminal utilisateur).

Le procédé de transmission selon un mode de réalisation de l'invention comprend enfin une quatrième étape 304, au cours de laquelle le BBU supprime de sa mémoire ou réémet les paquets d'échantillons I/Q envoyés lors de la première étape du procédé en fonction des acquittements reçus.

Cette étape dépend du mécanisme d'acquittement implémenté. Lorsqu'il s'agit d'un mécanisme d'acquittement positif :
- le BBU recevant un message d'acquittement ACK l'informant de la bonne réception d'un paquet d'échantillons I/Q par le RRH, il supprime de sa mémoire le paquet d'échantillons I/Q concerné, grâce à l'identifiant de séquence compris dans le message d'acquittement,
- lorsqu'il ne reçoit pas de message d'acquittement du RRH l'informant de la bonne réception d'un paquet d'échantillons I/Q après une durée donnée, le BBU réitère l'envoi du paquet d'échantillons I/Q concerné.

Lorsqu'il s'agit d'un mécanisme d'acquittement négatif :
- le BBU recevant un message d'acquittement l'informant de la réception erronée ou manquante d'un paquet d'échantillons I/Q par le RRH, renvoie le paquet d'échantillons I/Q concerné, grâce à l'identifiant de séquence compris dans le message d'acquittement,
- le BBU ne recevant pas de message l'informant de la réception erronée ou manquante d'un paquet d'échantillons I/Q par le RRH après une durée donnée, supprime le paquet d'échantillons I/Q concerné de sa mémoire.

Le mécanisme d'acquittement des messages mis en oeuvre au cours de la deuxième étape et de la quatrième étape du procédé permet de s'assurer :
- que le message envoyé par le BBU a bien été reçu par le RRH, et qu'il n'y a donc pas de panne ou d'erreur sur le lien entre ces deux équipements, et
- dans le cas d'un mécanisme d'acquittement positif, que le RRH est opérationnel, le message d'acquittement ACK faisant dans ce cas office de requête implicite pour la transmission de nouveaux paquets d'échantillons I/Q.

L'ordre dans lequel s'exécutent les étapes 302, 303 et 304 n'est pas figé. Ces étapes permettent d'éviter les pertes de paquets et de maitriser les latences de réémission des messages, et donc la durée d'indisponibilité de la liaison, contrairement aux procédés de transmission connus de l'état de l'art où les échantillons I/Q sont transmis sans mécanisme d'acquittement.

La durée au-delà de laquelle, sans message d'acquittement, la transmission d'un paquet d'échantillons I/Q est de nouveau réalisée (acquittement positif) ou le paquet d'échantillons I/Q est supprimé de la mémoire du BBU (acquittement négatif) est définie en fonction du contexte opérationnel : trop courte, elle peut être source de réémission non nécessaire de paquets d'échantillons I/Q ou d'impossibilité de réémission des paquets - trop longue, elle augmente la latence de retransmission des paquets ou l'espace mémoire requis. Suite à l'absence de réception d'un message d'acquittement ACK, à la réception d'un message de réception négatif NACK, ou lorsque le nombre de paquets non acquittés ou acquittés négativement est supérieur à un seuil sur une période donnée, le BBU peut commuter l'ensemble de ses transmissions ultérieures (y compris les réémissions de paquets) vers un deuxième RRH, ce qui permet de garantir la continuité de la liaison tout en laissant la possibilité de diagnostiquer le RRH défaillant, et éventuellement revenir sur le premier RRH une fois la liaison redevenue opérationnelle.

L'acquittement positif des paquets d'échantillons et la transmission des paquets d'échantillons suivants peut être réalisé par une technique de « Stop and Wait », où le BBU envoie un paquet d'échantillons I/Q au RRH et attend l'acquittement ACK de ce paquet avant d'en transmettre un nouveau, ou par une technique de « Go Back N », où le BBU envoie N paquets d'échantillons I/Q consécutifs au RRH, qui acquitte chacun des paquets individuellement ou acquitte l'ensemble des N paquets en un seul message. L'utilisation de la technique de « Go Back N » pour acquitter plusieurs messages utilise plus efficacement la liaison de données entre RRH et BBU. Le principe est le même pour les mécanismes d'acquittement négatifs, où plusieurs paquets peuvent être acquittés par un même message NACK. De manière plus générale, l'invention s'applique quel que soit le mécanisme d'ARQ (acronyme anglais pour *Automatique Repeat reQuest,* ou reprise sur erreur) mis en oeuvre.

Avantageusement, l'invention s'applique dans le cas d'un mécanisme dit de « Hybride ARQ » combinant la protection de pertes appliquées aux paquets de données (*Forward Error correction,* ou FEC en anglais) et les retransmissions. Cette méthode consiste à protéger les paquets d'échantillons I/Q par une couche supplémentaire de codage correcteur d'erreur, afin de corriger certains des paquets erronés lors de leur réception, dans le but de diminuer la latence consécutive aux retransmissions en cas de pertes de paquets. Dans ce cas la première étape 301 est modifiée dans le sens où le BBU calcule, sur chaque série de M paquets à émettre, une série de N paquets de redondance, M et N étant des choix d'implémentation déterminés par l'opérateur en fonction du niveau de protection jugé nécessaire selon les connaissances du type de réseau et du type de lien raccordant la BBU et la RRH. Les N paquets de redondance sont émis par la BBU après les M paquets de données dits utiles. Comme pour les paquets utiles, les paquets de redondance doivent posséder un identifiant de séquence. De nombreux algorithmes de codage correcteur d'erreurs permettant d'obtenir l'effet escompté sont bien connus de l'homme du métier, par exemple les codes correcteurs en blocs, comme les codes de Reed-Solomon, ou les codes convolutifs. A la réception des paquets par le RRH, la série de paquets utiles et de redondance est reconstituée, en prenant en compte les éventuelles positions de pertes de paquets grâce aux identifiants de séquences des autres paquets reçus. S'il n'y a pas eu de pertes de paquets dans les M premiers paquets de la série (paquets utiles), le RRH peut supprimer les paquets de redondance. S'il y a eu des pertes de paquets, le RRH va essayer de décoder la série de paquets pour reconstituer la série des M paquets utiles. S'il y parvient, les échantillons IQ peuvent être directement extraits. Le RRH acquitte alors les paquets de données au BBU, par un message d'acquittement positif ACK lorsque c'est le mécanisme d'acquittement implémenté. Dans le cas contraire, un ou plusieurs messages d'acquittement négatif NACK sont émis pour demander la retransmission des paquets manquants au BBU lorsque c'est le mécanisme d'acquittement implémenté.

Le procédé de transmission décrit permet donc de détecter très rapidement une panne complète sur la liaison de données entre BBU et RRH, et d'agir immédiatement en basculant vers un RRH de substitution sans pertes de paquets.

Il permet en outre au BBU de commuter vers un RRH de substitution sans perte de paquets, en particulier les paquets en cours d'acquittement par le premier RRH, en cas de dégradation très rapide de la qualité de liaison (par exemple en cas de mauvaises conditions météorologiques ou d'interférences crées par une autre source d'émission).

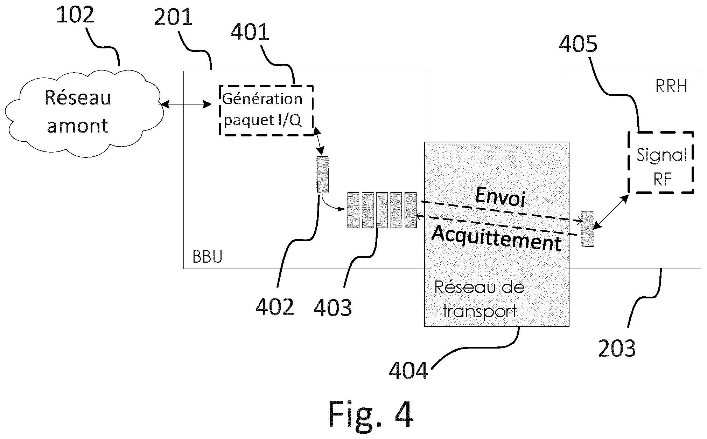

La figure 4 représente schématiquement la mise en oeuvre du procédé de transmission entre BBU et RRH selon un mode de réalisation de l'invention, donné à titre d'exemple, dans lequel le mécanisme d'acquittement implémenté est un mécanisme d'acquittement positif des paquets.

Le BBU 201 dispose de données à émettre, générées localement ou reçues à travers un réseau amont 102. Ces données sont transformées en paquets d'échantillons I/Q, puis en paquets de données réseau à transmettre par les moyens de calcul 401, comme par exemple un processeur, un processeur de signal numérique (plus connu sous le sigle anglais de DSP pour « *Digital Signal Processor* »), ou un circuit spécialisé tel qu'un ASIC (acronyme anglais pour « *Application Specific Integrated Circuit* ») ou un FPGA (sigle anglais pour « *Field-Programmable Gate Array* »). Des identifiants sont associés aux paquets d'échantillons I/Q.

Les paquets 402 d'échantillons I/Q générés sont empilés dans une mémoire 403, par exemple une mémoire de type FIFO (acronyme anglais pour « *First In First Out* ») ou tout autre type de mémoire. Le paquet d'échantillons I/Q le plus ancien est transmis au RRH 203 à travers un réseau de transport 404 (en anglais *Transport Network*), qui peut par exemple être une liaison dédiée assurée par un réseau IP ou Ethernet, ou un lien fibré dédié. Suite à la réception du paquet d'échantillons I/Q, un message d'acquittement ACK est envoyé par le RRH au BBU, qui peut alors supprimer le paquet d'échantillons concerné de sa mémoire 403. Lorsque le message d'acquittement n'est pas reçu par le BBU après une durée donnée (ou lorsque le RRH lui transmet un message d'acquittement négatif NACK), le paquet d'échantillons I/Q est envoyé à nouveau, avantageusement vers un autre RRH. Le RRH transforme les paquets d'échantillons I/Q correctement reçus en signaux analogiques RF 405 et les transmet sur la voie air (par exemple vers un répéteur satellite).

Sur la voie descendante, le procédé inverse s'applique de manière sensiblement équivalente. Dans ce cas, le RRH 202, 211 et 203 comprend un convertisseur analogique vers numérique et une chaîne radiofréquence configurée pour produire des échantillons I/Q numériques en bande de base à partir d'un signal RF analogique sur fréquence porteuse. Il est également configuré pour conditionner les échantillons I/Q sous la forme de paquets d'échantillons associés à un identifiant, et les mémoriser.

le BBU 201 reçoit des paquets d'échantillons I/Q transmis par le RRH, et est configuré pour en extraire un flux d'informations numériques en les démodulant et en les décodant.

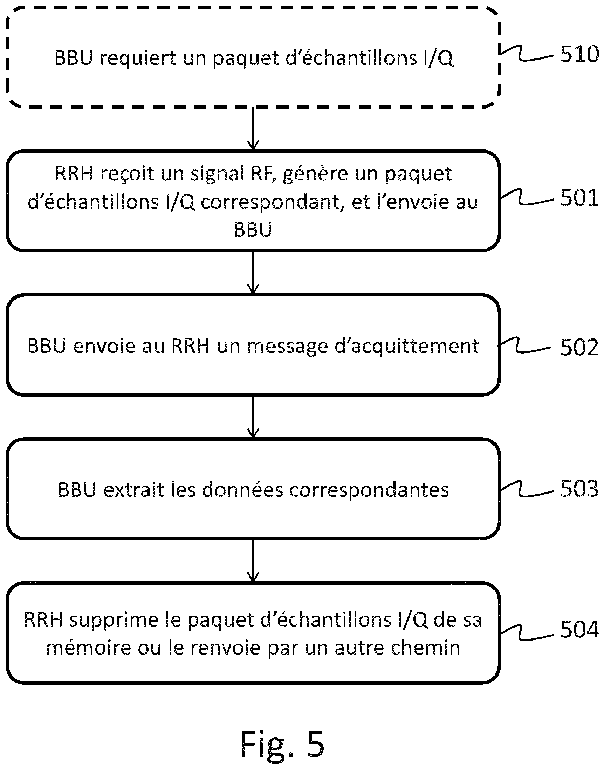

La figure 5 représente les différentes étapes d'un procédé de transmission de données selon un mode de réalisation de l'invention, dans le sens de la liaison descendante. Il comprend :
- une première étape 501, au cours de laquelle le RRH reçoit un signal RF analogique depuis la voie air, et est configuré pour en extraire un ou plusieurs paquets d'échantillons I/Q correspondants, comprenant chacun un identifiant de séquence, avantageusement un identifiant déterministe, qu'il mémorise et envoie au BBU,
- une deuxième étape 502 au cours de laquelle le BBU acquitte les paquets de données, soit par un mécanisme d'acquittement positif où un message ACK d'acquittement est transmis au RRH lorsqu'un paquet d'échantillons I/Q est correctement reçu, soit par un mécanisme d'acquittement négatif où un message NACK d'acquittement est transmis au RRH lorsqu'un paquet d'échantillons est détecté comme erroné ou manquant, soit par une combinaison des deux mécanismes,
- une troisième étape 503 au cours de laquelle le BBU extrait les données utiles reçues en réalisant l'ensemble des traitements nécessaires, en particulier la démodulation et le décodage, sur les paquets d'échantillons I/Q numériques,
- une quatrième étape 504, au cours de laquelle le RRH supprime de sa mémoire ou réémet les paquets d'échantillons I/Q transmis lors de la première étape du procédé en fonction des messages d'acquittement reçus :
   ∘ lorsqu'il reçoit un message d'acquittement ACK l'informant de la bonne réception d'un paquet d'échantillons I/Q ou lorsqu'aucun message d'acquittement négatif NACK n'est reçu après une durée donnée, le RRH supprime de sa mémoire le paquet d'échantillons I/Q correspondant grâce à son identifiant de séquence,
   ∘ lorsqu'il ne reçoit pas de message d'acquittement ACK l'informant de la bonne réception d'un paquet d'échantillons I/Q après une durée donnée ou lorsqu'il reçoit un message d'acquittement négatif NACK l'informant qu'un paquet d'échantillons I/Q n'est pas correctement reçu ou est manquant, le RRH renvoie le paquet d'échantillons I/Q correspondant au BBU.

Avantageusement, dans la quatrième étape 504, lorsqu'un paquet d'échantillons I/Q est réémis, il peut être réacheminé par un autre lien de communications : idéalement par un autre lien physique, comme par exemple un lien de communications redondant entre RRH et BBU et/ou un chemin réseau différent dans un réseau IP commuté. Les transmissions ultérieures peuvent également se faire selon le lien de communications redondant/le chemin réseau différent. L'ordre dans lequel s'exécutent les étapes 502, 503 et 504 n'est pas figé.

De manière alternative ou complémentaire, lorsque le réseau comprend plusieurs BBU, les RRH peuvent être configurés pour retransmettre les paquets d'échantillons et les transmissions ultérieures vers un autre BBU.

Tout comme pour la liaison montante, lors de l'étape 501, le RRH peut envoyer au BBU des paquets d'échantillons I/Q dès qu'ils sont prêts, ou exposer sa file d'attente au BBU et attendre une requête émise par le BBU lors d'une étape préliminaire 510.

Comme pour la liaison montante, l'invention s'applique dans le cas d'un mécanisme dit de « Hybride ARQ » combinant la protection de pertes appliquées aux paquets de données et les retransmissions, par l'ajout d'une couche de code correcteur d'erreur sur les paquets de données transmis.

Enfin, comme pour la liaison montante, l'acquittement des messages peut être réalisé de différentes manières, comme par exemple par un mécanisme de « Stop and Wait » ou de « Go Back N », dans lequel les messages d'acquittement sont regroupés.

Le procédé selon l'invention présente les mêmes avantages dans le sens montant et dans le sens descendant. En particulier, la mise en oeuvre d'un mécanisme d'acquittement des échanges entre RRH et BBU permet de s'assurer qu'il n'y a pas de panne sur le lien de communications entre ces deux équipements et que le BBU est bien opérationnel. Il permet en outre d'éviter les pertes de paquets, et d'offrir une latence courte de retransmission des messages.

Contrairement aux protocoles réseaux tel que le protocole TCP, le procédé selon l'invention ne met pas en oeuvre de mécanisme de contrôle de la congestion. Le BBU et le RRH sont configurés pour transmettre les paquets d'échantillons I/Q avec un débit constant.

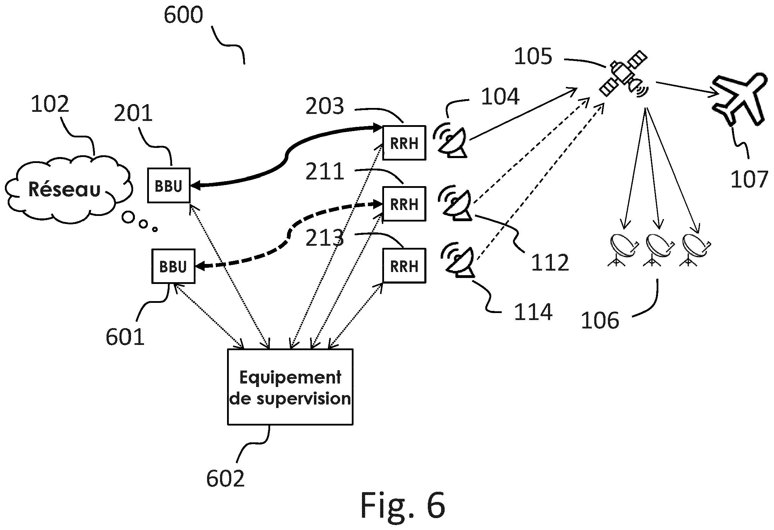

La figure 6 représente un autre mode de réalisation de l'invention, dans lequel le système de communications 600 comprend en outre un deuxième BBU 601 et un équipement 602 de supervision des BBU et des RRH.

L'équipement de supervision est configuré pour connaitre les besoins de transmission des BBU et leur état. Pour cela, il supervise les files d'attente des paquets d'échantillons I/Q à transmettre par les BBU, par exemple par des échanges réguliers de messages de contrôle dans un réseau de collecte.

De même, l'équipement de supervision est configuré pour connaitre l'état des files d'attentes des RRH et des équipements.

L'équipement de supervision 602 associe un BBU avec un RRH lorsque qu'un BBU (liaison montante) ou un RRH (liaison descendante) a des besoins de transmission. Cette association peut être réalisé en suivant des ordres de préférence établis de façon opérationnelle par rapport à des considérations diverses telles que la disponibilité effective des liens terrestres, les données météorologiques connues propres à la zone géographique où est installée chaque RRH la proximité entre les RRH et les BBU, le coût d'utilisation des RRH, ou autre.

L'équipement de supervision est également configuré pour revoir les associations entre BBU et RRH lorsque c'est justifié, c'est à dire:
- lorsqu'un RRH ou un BBU devient injoignable, et/ou
- lorsque le remplissage de la file d'attente d'un BBU ou d'un RRH dépasse un seuil, la valeur du seuil pouvant être choisie comme légèrement supérieure au nombre maximum de paquets d'échantillons en cours d'acquittement en fonctionnement nominal. Cette quantité peut être relativement élevée compte tenu des débits visés, mais permet toutefois de fixer une borne supérieure du temps de déclenchement de changement d'association BBU/RRH consécutivement à une panne sur la liaison.

Pour le reste, les envois de paquets d'échantillons I/Q et les acquittements entre BBU et RRH ont lieu comme décrit aux figures 3 et 5. En particulier, l'équipement de supervision surveille les acquittements de paquets, et modifie les associations entre BBU et RRH lorsque c'est nécessaire.

L'équipement de supervision permet donc d'automatiser le processus d'association entre BBU et RRH et le processus de commutation des équipements. Les commutations se font de manière dynamique et transparente, sans l'aide d'un opérateur.

Les procédés de transmission selon l'invention s'appuient notamment sur le marquage des paquets de données par un identifiant de séquence, ce qui permet de pouvoir gérer au mieux l'espace mémoire requis pour les mémoriser et les réémettre si nécessaire.

Les protocoles utilisés habituellement pour les transmissions entre BBU et RRH, comme par exemple les protocoles CPRI, eCPRI, OBSAI ou NGFI, permettent d'envoyer les données par paquets sur des liens Ethernet ou IP/UDP, mais ne prévoient pas d'identifier les paquets de données transmis. Ils ne permettent donc pas de mettre en oeuvre le procédé de transmission selon l'invention sans ajustements. Il est donc nécessaire d'adapter leur utilisation afin de les rendre compatibles avec le procédé décrit.

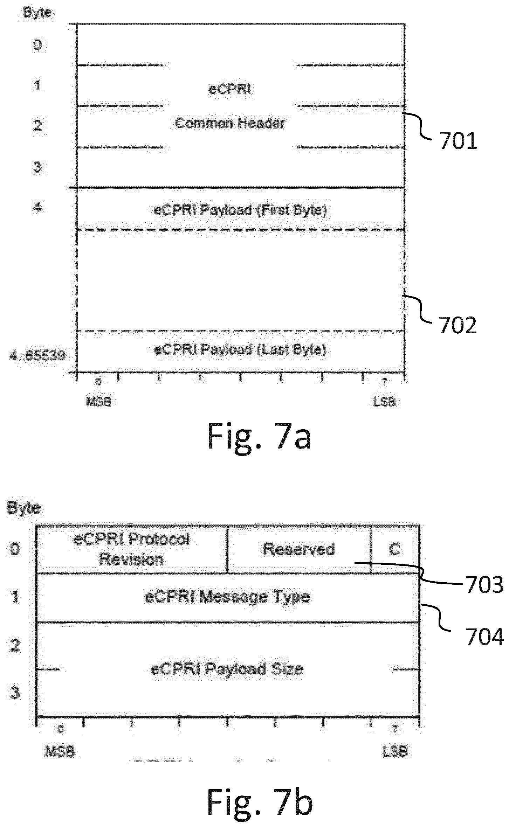

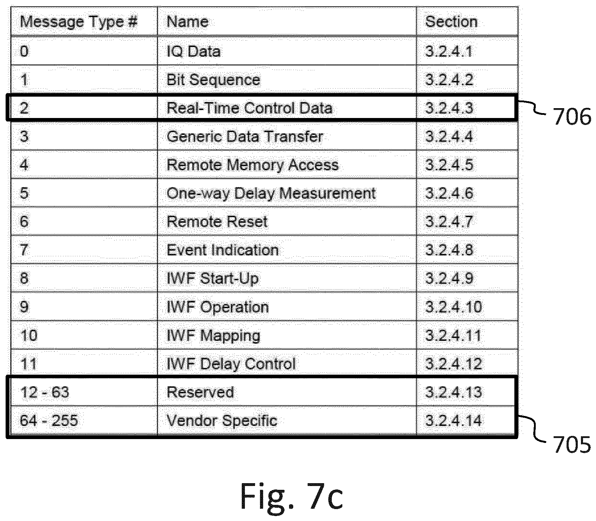

La figure 7 illustre en (a), (b) et (c) différents champs de paquets de données selon le protocole eCPRI pouvant être utilisés pour identifier des paquets d'échantillons I/Q.

Comme représenté en (a), les paquets de données eCPRI comprennent un entête 701 (*eCPRI common Header*) et des données utiles 702 (*eCPRI Payload*).

La table (b) représente les différents champs de l'entête 701. Parmi ces champs, le champ « réservé » 703 (*Reserved*) comprend trois bits permettant de mettre en place un premier niveau de numérotation pour identifier les séquences. Cependant, trois bits ne sont généralement pas suffisants pour numéroter les paquets d'échantillons I/Q à transmettre compte tenu des débits considérés. L'entête eCPRI comprend également un champ 704 d'un octet concernant le type de message (*eCPRI Message Type*). L'invention propose d'utiliser ce champ pour identifier les paquets d'échantillons I/Q.

La table (c) représente les différents types de messages pouvant être transmis dans le champ 704 *eCPRI Message Type.* Les messages 12 à 255 référencés 705, soit 244 messages, peuvent être utilisés pour identifier les paquets de données. Enfin, le champ 706 *Real-Time Control Data* peut être utilisé comme un message supplémentaire pour l'identification des paquets.

L'entête des paquets de données eCPRI peut donc être utilisé pour numéroter les paquets d'échantillons I/Q à transmettre. Le champ réservé 703 permet de disposer de 3 bits afin de mettre en oeuvre 8 flux concurrents. Le champ 705 *eCPRI Message Type* permet de définir un ensemble de 244 messages par flux concurrent afin d'identifier les paquets. Le champ 706 *Real-Time Control Data* offre un message supplémentaire. Ainsi, en combinant ces trois données, il est possible de définir un ensemble de 8*245=1960 messages, ou 245 messages par flux pour 8 flux concurrents, ce qui permet de répondre aux besoins de plusieurs flux parallèles et de flux très hauts débits.

Le procédé de transmission de données selon l'invention peut alors être mis en oeuvre à partir de protocoles de transmission standard entre BBU et RRH, en utilisant les champs des entêtes de paquets de données pour qu'ils permettent de numéroter les paquets. Il ne requiert pas forcément la modification de ces standards, puisque les champs existants peuvent être détournés aux fins visés.

L'invention porte également sur un système de communications comprenant un ou plusieurs BBU et plusieurs RRH, les équipements étant configurés pour mettre en oeuvre le procédé décrit précédemment dans un de ses modes de réalisation. Elle porte également sur les équipements BBU et RRH de ce système de communication, configurés pour échanger des échantillons I/Q transmis par paquets et associés à un mécanisme d'acquittement et de retransmissions.

## Revendications

1. Procédé de transmission de données dans un système de communications radiofréquence (RF) d'un réseau de télécommunications, le système comprenant :
- au moins un équipement (201, 601) comprenant une mémoire, dit BBU, configuré pour générer des échantillons numériques en phase et en quadrature de phase, dits échantillons I/Q, à partir de données à émettre, et pour extraire des données utiles d'échantillons I/Q,
- une pluralité d'équipements (203, 211, 213) comprenant une mémoire, dits RRH, configurés pour générer et transmettre un signal analogique RF à partir d'échantillons I/Q, et pour générer des échantillons I/Q à partir d'un signal analogique RF reçu,
- des liens de communication numérique pour la transmission des échantillons I/Q entre le ou les BBU et les RRH,
chaque BBU étant configuré pour :
- envoyer des données dans le réseau de télécommunications en générant des échantillons I/Q correspondant aux données à envoyer, et en les transmettant sur un lien de communications numérique à un des RRH pour qu'il émette un signal analogique RF correspondant, et
- recevoir des données du réseau de télécommunications sur un lien de communications numérique depuis un des RRH sous la forme d'échantillons I/Q extraits d'un signal analogique RF,
le procédé de transmission de données comprenant :
- l'échange d'échantillons I/Q organisés sous la forme de paquets d'échantillons I/Q marqués par un identifiant de séquence entre le ou les BBU et les RRH,
- la mise en oeuvre d'un mécanisme d'acquittement des paquets d'échantillons I/Q échangés entre le ou les BBU et les RRH,
le procédé de transmission étant **caractérisé en ce qu'**il comprend en outre la modification du RRH destinataire des paquets d'échantillons I/Q émis par chaque BBU en fonction de l'état des acquittements des paquets d'échantillons I/Q.

2. Procédé de transmission de données selon la revendication 1, dans lequel les paquets d'échantillons I/Q échangés entre BBU et RRH sont protégés par un code correcteur d'erreurs.

3. Procédé de transmission de données selon l'une des revendications précédentes, dans lequel l'envoi de données dans le réseau de télécommunications comprend :
- une première étape (301) au cours de laquelle un BBU (201) stocke en mémoire et envoie un ou plusieurs paquets d'échantillons I/Q correspondant aux données à émettre à un premier RRH (203),
- une deuxième étape (302) au cours de laquelle le premier RRH (203) acquitte la réception du ou des paquets d'échantillons I/Q auprès du BBU par au moins un mécanisme d'acquittement parmi un mécanisme d'acquittement positif et un mécanisme d'acquittement négatif,
- une troisième étape (303) au cours de laquelle le premier RRH (203) génère et envoie un signal analogique RF correspondant aux paquets d'échantillons I/Q correctement reçus,
- une quatrième étape (304) au cours de laquelle le BBU supprime de sa mémoire ou réémet le ou les paquets d'échantillons I/Q envoyés lors de la première étape (301) du procédé en fonction des acquittements reçus du RRH suite à la deuxième étape (302) du procédé.

4. Procédé de transmission de données selon l'une des revendications précédentes, dans lequel, lorsque le mécanisme d'acquittement mis en oeuvre comprend un mécanisme d'acquittement positif :
- la deuxième étape (302) comprend la transmission, par le premier RRH au BBU, d'un message d'acquittement ACK lors de la réception correcte d'un ou plusieurs paquets d'échantillons I/Q, le message d'acquittement comprenant l'identifiant de séquence du ou des paquets d'échantillons I/Q,
- la quatrième étape (304) comprend la suppression, par le BBU, des paquets d'échantillons I/Q stockés en mémoire correspondants aux messages d'acquittement ACK reçus, et la réémission des paquets d'échantillons I/Q stockés en mémoire pour lesquels aucun message d'acquittement ACK n'est reçu après une durée donnée ;
et dans lequel, lorsque le mécanisme d'acquittement mis en oeuvre comprend un mécanisme d'acquittement négatif :
- la deuxième étape (302) comprend la transmission, par le premier RRH au BBU, d'un message d'acquittement négatif NACK lorsqu'un paquet d'échantillons I/Q est erroné ou manquant, le message d'acquittement négatif NACK comprenant l'identifiant de séquence du paquet d'échantillons I/Q,
- la quatrième étape (304) comprend la suppression, par le BBU, des paquets d'échantillons I/Q stockés en mémoire pour lesquels aucun message d'acquittement négatif NACK n'est reçu après une durée donnée, et la réémission des paquets d'échantillons I/Q pour lesquels un message d'acquittement négatif NACK est reçu.

5. Procédé de transmission de données selon l'une des revendications 3 et 4, dans lequel lorsque le nombre de paquets non acquittés ou le nombre de paquets acquittés négativement lors de la quatrième étape (304) est supérieur à un seuil sur une période donnée, la réémission d'un paquet d'échantillons I/Q et les transmissions ultérieures sont réalisées auprès d'un deuxième RRH.

6. Procédé de transmission de données selon l'une des revendications précédentes, dans lequel la réception de données depuis le réseau de communications comprend :
- une première étape (501) au cours de laquelle un RRH (203) recevant un signal analogique RF génère, stocke en mémoire et envoie à un BBU (201) un ou plusieurs paquets d'échantillons I/Q correspondants,
- une deuxième étape (502) au cours de laquelle le BBU acquitte la réception du ou des paquets d'échantillons I/Q auprès du RRH par au moins un mécanisme d'acquittement parmi un mécanisme d'acquittement positif et un mécanisme d'acquittement négatif,
- une troisième étape (503) au cours de laquelle le BBU extrait des données des paquets d'échantillons I/Q correctement reçus,
- une quatrième étape (504) au cours de laquelle le RRH supprime de sa mémoire ou réémet le ou les paquets d'échantillons I/Q envoyés lors de la première étape (501) du procédé en fonction des acquittements reçus du BBU suite à la deuxième étape (502) du procédé.

7. Procédé de transmission de données selon l'une des revendications précédentes, dans lequel, lorsque le mécanisme d'acquittement mis en oeuvre comprend un mécanisme d'acquittement positif :
- la deuxième étape (502) comprend la transmission, par le BBU au RRH, d'un message d'acquittement ACK lors de la réception correcte d'un ou plusieurs paquets d'échantillons I/Q, le message d'acquittement comprenant l'identifiant de séquence du ou des paquets d'échantillons I/Q,
- la quatrième étape (504) comprend la suppression, par le RRH, des paquets d'échantillons I/Q stockés en mémoire correspondants aux messages d'acquittement ACK reçus, et la réémission des paquets d'échantillons I/Q stockés en mémoire pour lesquels aucun message d'acquittement ACK n'est reçu après une durée donnée ;
et dans lequel, lorsque le mécanisme d'acquittement mis en oeuvre comprend un mécanisme d'acquittement négatif :
- la deuxième étape (502) comprend la transmission, par le BBU au RRH, d'un message d'acquittement négatif NACK lorsqu'un paquet d'échantillons I/Q est erroné ou manquant, le message d'acquittement négatif NACK comprenant l'identifiant de séquence du paquet d'échantillons I/Q,
- la quatrième étape (304) comprend la suppression, par le RRH, des paquets d'échantillons I/Q stockés en mémoire pour lesquels aucun message d'acquittement négatif NACK n'est reçu après une durée donnée, et la réémission des paquets d'échantillons I/Q pour lesquels un message d'acquittement négatif NACK est reçu.

8. Procédé de transmission de données selon l'une des revendications 6 et 7, dans lequel lors de la quatrième étape (504), la réémission d'un paquet d'échantillons I/Q est réalisée par un autre lien de communication numérique.

9. Procédé de transmission de données selon l'une des revendications précédentes, dans lequel le système de communications RF comprend en outre un équipement (502) de supervision des BBU et RRH, l'équipement de supervision étant configuré pour associer RRH et BBU pour la transmission de données.

10. Procédé de transmission de données selon la revendication précédente, dans lequel l'équipement de supervision (502) supervise les files d'attentes (403) du ou des BBU et des RRH.

11. Procédé de transmission de données selon l'une des revendications précédentes, dans lequel le lien de communication numérique pour la transmission des paquets d'échantillons I/Q entre BBU et RRH utilise un protocole de communication parmi les standards CPRI, eCPRI, OBSAI et NGFI.

12. Procédé de transmission de données selon la revendication 11, dans lequel le protocole de communication utilisé est le protocole eCPRI dont le champ « *eCPRI Message Type »* est utilisé pour identifier les paquets d'échantillons I/Q.

13. Procédé de transmission de données selon l'une des revendications précédentes, dans lequel les liens de communications numériques entre BBU et RRH ou entre RRH et BBU sont à débit constant.

14. Système de communications radiofréquence (RF) (200, 500) pour un réseau de télécommunications, le système de communications radiofréquence comprenant :
- au moins un équipement (201, 601) comprenant une mémoire, dit BBU, configuré pour générer des échantillons numériques en phase et en quadrature de phase, dits échantillons I/Q, à partir de données à émettre, et pour reconstituer des données reçues à partir d'échantillons I/Q,
- une pluralité d'équipements (203, 211, 213) comprenant une mémoire, dits RRH, configurés pour générer et transmettre un signal analogique RF à partir d'échantillons I/Q, et pour générer des échantillons I/Q à partir d'un signal analogique RF reçu,
- des liens de communication numérique pour la transmission des échantillons I/Q entre le ou les BBU et les RRH,
chaque BBU étant configuré pour :
- envoyer des données dans le réseau de télécommunications en générant des échantillons I/Q correspondant aux données à envoyer, et en les transmettant sur un lien de communications numérique à un des RRH pour qu'il émette un signal analogique RF correspondant, et
- recevoir des données du réseau de télécommunications sur un lien de communications numérique depuis un des RRH sous la forme d'échantillons I/Q extraits d'un signal analogique RF,
le ou les BBU et les RRH étant configurés pour échanger des échantillons I/Q organisés sous la forme de paquets d'échantillons I/Q marqués par un identifiant de séquence, et pour mettre en oeuvre un mécanisme d'acquittement des paquets qu'ils échangent,
le système de communications radiofréquences étant **caractérisé en ce qu'**il est configuré pour modifier le RRH destinataire des paquets d'échantillons I/Q émis par chaque BBU en fonction de l'état des acquittements des paquets d'échantillons I/Q.

## Patentansprüche

1. Verfahren zur Datenübertragung in einem Funkfrequenz-(RF-)Kommunikationssystem eines Telekommunikationsnetzes, wobei das System Folgendes umfasst:
- mindestens eine einen Speicher umfassende Ausrüstung (201, 601), genannt BBU, die so konfiguriert ist, dass sie anhand von zu übertragenden Daten phasengleiche und Quadraturphasen-Digitalabtastwerte, genannt I/Q-Abtastwerte, erzeugt und aus den I/Q-Abtastwerten Nutzdaten extrahiert,
- eine Vielzahl von einen Speicher umfassenden Ausrüstungen (203, 211, 213), genannt RRH, die konfiguriert sind, um ein analoges RF-Signal anhand von I/Q-Abtastwerten zu erzeugen und zu übertragen, und um I/Q-Abtastwerte anhand eines empfangenen analogen RF-Signals zu erzeugen,
- digitale Kommunikationsverbindungen für die Übertragung der I/Q-Abtastwerte zwischen der einen oder den mehreren BBU und den RRH,
wobei jede BBU zu Folgendem konfiguriert ist:
- Senden von Daten im Telekommunikationsnetz durch Erzeugen von I/Q-Abtastwerten, die den zu sendenden Daten entsprechen, und durch Übertragen dieser Daten über eine digitale Kommunikationsverbindung an eine der RRH, damit diese ein entsprechendes analoges RF-Signal aussendet, und
- Empfangen von Daten aus dem Telekommunikationsnetz über eine digitale Kommunikationsverbindung von einer der RRH in Form von I/Q-Abtastwerten, die aus einem analogen RF-Signal extrahiert wurden,
wobei das Datenübertragungsverfahren Folgendes umfasst:
- den Austausch von I/Q-Abtastwerten, die in Form von I/Q-Abtastwertpaketen organisiert sind, die mit einer Sequenzkennung gekennzeichnet sind, zwischen der einen oder den mehreren BBU und den RRH,
- die Implementierung eines Mechanismus zur Quittierung der I/Q-Abtastwertpakete, die zwischen der einen oder den mehreren BBU und den RRH ausgetauscht werden,
wobei das Übertragungsverfahren **dadurch gekennzeichnet ist, dass** es ferner die Modifikation der RRH umfasst, welche der Empfänger der von jeder BBU gesendeten I/Q-Abtastwertpakete ist, in Abhängigkeit vom Status der Quittierungen der I/Q-Abtastwertpakete.

2. Verfahren zur Datenübertragung nach Anspruch 1, wobei die zwischen BBU und RRH ausgetauschten I/Q-Abtastwertpakete durch einen Fehlerkorrekturcode geschützt sind.

3. Verfahren zur Datenübertragung nach einem der vorhergehenden Ansprüche, wobei das Senden von Daten im Telekommunikationsnetz Folgendes umfasst:
- einen ersten Schritt (301), in dem eine BBU (201) ein oder mehrere Pakete von I/Q-Abtastwerten, die den zu übertragenden Daten entsprechen, in einem Speicher speichert und an eine erste RRH (203) sendet,
- einen zweiten Schritt (302), in dem die erste RRH (203) den Empfang des einen oder der mehreren I/Q-Abtastwertpakete bei der BBU durch mindestens einen Quittierungsmechanismus aus einem positiven Quittierungsmechanismus und einem negativen Quittierungsmechanismus quittiert,
- einen dritten Schritt (303), in dem die erste RRH (203) ein analoges RF-Signal, das den korrekt empfangenen I/Q-Abtastwertpaketen entspricht, erzeugt und sendet,
- einen vierten Schritt (304), in dem die BBU das eine oder die mehreren im ersten Schritt (301) des Verfahrens gesendeten I/Q-Abtastwertpakete in Abhängigkeit von den von der RRH nach dem zweiten Schritt (302) des Verfahrens empfangenen Quittierungen aus ihrem Speicher löscht oder erneut aussendet.

4. Verfahren zur Datenübertragung nach einem der vorhergehenden Ansprüche, wobei, wenn der implementierte Quittierungsmechanismus einen positiven Quittierungsmechanismus umfasst:
- der zweite Schritt (302) das Übertragen einer Quittierungsnachricht ACK bei korrektem Empfang eines oder mehrerer I/Q-Abtastwertpakete durch die erste RRH an die BBU umfasst, wobei die Quittierungsnachricht die Sequenzkennung des einen oder der mehreren I/Q-Abtastwertpakete umfasst,
- der vierte Schritt (304) das Löschen der im Speicher gespeicherten I/Q-Abtastwertpakete, die den empfangenen ACK-Quittierungsmeldungen entsprechen, durch die BBU, und das erneute Aussenden der im Speicher gespeicherten I/Q-Abtastwertpakete, für die nach einer gegebenen Zeit keine ACK-Quittierungsmeldung empfangen wurde, umfasst;
und wobei, wenn der implementierte Quittierungsmechanismus einen negativen Quittierungsmechanismus umfasst:
- der zweite Schritt (302) das Übertragen einer negativen Quittierungsnachricht NACK durch die erste RRH an die BBU umfasst, wenn ein I/Q-Abtastwertpaket fehlerhaft ist oder fehlt, wobei die negative Quittierungsnachricht NACK die Sequenzkennung des I/Q-Abtastwertpakets umfasst,
- der vierte Schritt (304) das Löschen der im Speicher gespeicherten I/Q-Abtastwertpakete, für die nach einer gegebenen Zeit keine negative Quittierungsnachricht NACK empfangen wurde, durch die BBU, und das erneute Aussenden der I/Q-Abtastwertpakete, für die eine negative Quittierungsnachricht NACK empfangen wurde, umfasst.

5. Verfahren zur Datenübertragung nach einem der Ansprüche 3 oder 4, wobei, wenn die Anzahl der nicht quittierten Pakete oder die Anzahl der negativ quittierten Pakete im vierten Schritt (304) über einen bestimmten Zeitraum über einem Schwellenwert liegt, die erneute Aussendung eines I/Q-Abtastwertpakets und nachfolgende Übertragungen bei einer zweiten RRH durchgeführt werden.

6. Verfahren zur Datenübertragung nach einem der vorhergehenden Ansprüche, wobei der Empfang von Daten vom Kommunikationsnetz Folgendes umfasst:
- einen ersten Schritt (501), in dem eine RRH (203), die ein analoges RF-Signal empfängt, ein oder mehrere entsprechende I/Q-Abtastwertpakete erzeugt, im Speicher speichert und an eine BBU (201) sendet,
- einen zweiten Schritt (502), in dem die BBU den Empfang des einen oder der mehreren I/Q-Abtastwertpakete bei der RRH durch mindestens einen Quittierungsmechanismus aus einem positiven Quittierungsmechanismus und einem negativen Quittierungsmechanismus quittiert,
- einen dritten Schritt (503), in dem die BBU Daten aus den korrekt empfangenen I/Q-Abtastwertpaketen extrahiert,
- einen vierten Schritt (504), in dem die RRH das eine oder die mehreren im ersten Schritt (501) des Verfahrens gesendeten I/Q-Abtastwertpakete in Abhängigkeit von den von der BBU nach dem zweiten Schritt (502) des Verfahrens empfangenen Quittierungen aus seinem Speicher löscht oder erneut aussendet.

7. Verfahren zur Datenübertragung nach einem der vorhergehenden Ansprüche, wobei, wenn der implementierte Quittierungsmechanismus einen positiven Quittierungsmechanismus umfasst:
- der zweite Schritt (502) das Übertragen einer Quittierungsnachricht ACK bei korrektem Empfang eines oder mehrerer I/Q-Abtastwertpakete durch die BBU an die RRH umfasst, wobei die Quittierungsnachricht die Sequenzkennung des einen oder der mehreren I/Q-Abtastwertpakete umfasst,
- der vierte Schritt (504) das Löschen der im Speicher gespeicherten I/Q-Abtastwertpakete, die den empfangenen ACK-Quittierungsmeldungen entsprechen, durch die RRH umfasst, und das erneute Aussenden der im Speicher gespeicherten I/Q-Abtastwertpakete, für die nach einer gegebenen Zeit keine ACK-Quittierungsmeldung empfangen wurde;
und wobei, wenn der implementierte Quittierungsmechanismus einen negativen Quittierungsmechanismus umfasst:
- der zweite Schritt (502) das Übertragen einer negativen Quittierungsnachricht NACK durch die BBU an die RRH umfasst, wenn ein I/Q-Abtastwertpaket fehlerhaft ist oder fehlt, wobei die negative Quittierungsnachricht NACK die Sequenzkennung des I/Q-Abtastwertpakets umfasst,
- der vierte Schritt (304) das Löschen der im Speicher gespeicherten I/Q-Abtastwertpakete, für die nach einer gegebenen Zeit keine negative Quittierungsnachricht NACK empfangen wurde, durch die RRH, und das erneute Aussenden der I/Q-Abtastwertpakete, für die eine negative Quittierungsnachricht NACK empfangen wurde, umfasst.

8. Verfahren zur Datenübertragung nach einem der Ansprüche 6 und 7, wobei im vierten Schritt (504) die erneute Übertragung eines I/Q-Abtastwertpakets über eine andere digitale Kommunikationsverbindung erfolgt.

9. Verfahren zur Datenübertragung nach einem der vorhergehenden Ansprüche, wobei das RF-Kommunikationssystem ferner eine Ausrüstung (502) zur Überwachung von BBU und RRH umfasst, wobei die Ausrüstung zur Überwachung so konfiguriert ist, dass sie RRH und BBU für die Datenübertragung zuordnet.

10. Verfahren zur Datenübertragung nach dem vorhergehenden Anspruch, wobei die Ausrüstung zur Überwachung (502) die Warteschlangen (403) der einen oder mehreren BBU und der mehreren RRH überwacht.

11. Datenübertragungsverfahren nach einem der vorhergehenden Ansprüche, wobei die digitale Kommunikationsverbindung für die Übertragung der I/Q-Abtastwertpakete zwischen BBU und RRH ein Kommunikationsprotokoll aus den Standards CPRI, eCPRI, OBSAI und NGFI verwendet.

12. Verfahren zur Datenübertragung nach Anspruch 11, wobei das verwendete Kommunikationsprotokoll das eCPRI-Protokoll ist, dessen Feld *"eCPRI Message Type"* zur Identifizierung der I/Q-Abtastwertpakete verwendet wird.

13. Verfahren zur Datenübertragung nach einem der vorhergehenden Ansprüche, wobei die digitalen Kommunikationsverbindungen zwischen BBU und RRH oder zwischen RRH und BBU eine konstante Datenrate aufweisen.

14. Funkfrequenz-(RF-)Kommunikationssystem (200, 500) für ein Telekommunikationsnetz, wobei das Funkfrequenzkommunikationssystem Folgendes umfasst:
- mindestens eine einen Speicher umfassende Ausrüstung (201, 601), genannt BBU, die so konfiguriert ist, dass sie anhand von zu übertragenden Daten phasengleiche und Quadraturphasen-Digitalabtastwerte, genannt I/Q-Abtastwerte, erzeugt und empfangene Daten anhand von I/Q-Abtastwerten rekonstruiert,
- eine Vielzahl von einen Speicher umfassenden Ausrüstungen (203, 211, 213), genannt RRH, die konfiguriert sind, um ein analoges RF-Signal anhand von I/Q-Abtastwerten zu erzeugen und zu übertragen, und um I/Q-Abtastwerte anhand eines empfangenen analogen RF-Signals zu erzeugen,
- digitale Kommunikationsverbindungen für die Übertragung der I/Q-Abtastwerte zwischen der einen oder den mehreren BBU und den RRH,
wobei jede BBU zu Folgendem konfiguriert ist:
- Senden von Daten im Telekommunikationsnetz durch Erzeugen von I/Q-Abtastwerten, die den zu sendenden Daten entsprechen, und durch Übertragen dieser Daten über eine digitale Kommunikationsverbindung an einen der RRH, damit diese ein entsprechendes analoges RF-Signal aussendet, und
- Empfangen von Daten aus dem Telekommunikationsnetz über eine digitale Kommunikationsverbindung von einer der RRH in Form von I/Q-Abtastwerten, die aus einem analogen RF-Signal extrahiert wurden,
wobei die eine oder mehrere BBU und die mehreren RRH konfiguriert sind, um I/Q-Abtastwerte auszutauschen, die in Form von I/Q-Abtastwertpaketen organisiert sind, die mit einer Sequenzkennung gekennzeichnet sind, und um einen Mechanismus zur Quittierung der Pakete, die sie austauschen, zu implementieren,
wobei das Funkfrequenzkommunikationssystem **dadurch gekennzeichnet ist, dass** es zur Modifikation des RRH konfiguriert ist, welcher der Empfänger der von jeder BBU gesendeten Pakete von I/Q-Abtastwerten ist, in Abhängigkeit vom Status der Quittierungen der Pakete von I/Q-Abtastwerten.

## Claims

1. A method for transmitting data in a radiofrequency (RF) communication system of a telecommunication network, the system comprising:
- at least one piece of equipment (201, 601), referred to as the BBU, comprising a memory, this piece of equipment being configured to generate in-phase and quadrature phase digital samples, referred to as I/Q samples, from data to be emitted, and to extract a payload from I/Q samples,
- a plurality of pieces of equipment (203, 211, 213), referred to as RRH, comprising a memory, these pieces of equipment being configured to generate and transmit an RF analogue signal on the basis of I/Q samples, and to generate I/Q samples from a received RF analogue signal,
- digital communication links for transmitting IQ samples between the one or more BBU and the RRH,
each BBU being configured to:
- send data in the telecommunication network by generating I/Q samples corresponding to the data to be sent, and, by transmitting them over a digital communication link to one of the RRH so that it transmits a corresponding RF analogue signal, and
- receive data of the telecommunication network over a digital communication link from one of the RRH in the form of I/Q samples extracted from an RF analogue signal,
the data transmission method comprising:
- the exchange of I/Q samples organised in the form of packets of I/Q samples marked by a sequence identifier between the one or more BBU and the multiple RRH,
- the implementation of a mechanism for acknowledging the packets of I/Q samples exchanged between the one or more BBU and the multiple RRH,
the transmission method being **characterised in that** it further comprises modifying the RRH that is the intended recipient of the packets of I/Q samples sent by each BBU depending on the state of the acknowledgements of the packets of I/Q samples.

2. The method for transmitting data according to claim 1, wherein the packets of I/Q samples that are exchanged between BBU and RRH are protected with an error correction code.

3. The method for transmitting data according to one of the preceding claims, wherein the transmission of data in the telecommunication network comprises:
- a first step (301) during which a BBU (201) stores in memory and transmits one or more packets of I/Q samples corresponding to the data to be emitted to a first RRH (203),
- a second step (302) during which the first RRH (203) acknowledges the receipt of the one or more packets of I/Q samples to the BBU via at least one acknowledgement mechanism among a positive acknowledgement mechanism and a negative acknowledgement mechanism,
- a third step (303) during which the first RRH (203) generates and sends an RF analogue signal corresponding to the packets of I/Q samples correctly received,
- a fourth step (304) during which the BBU removes from its memory or resends the one or more packets of I/Q samples transmitted in the first step (301) of the method depending on the acknowledgements received from the RRH following the second step (302) of the method.

4. The method for transmitting data according to one of the preceding claims, wherein, when the implemented acknowledgement mechanism comprises a positive acknowledgement mechanism:
- the second step (302) comprises the transmission, by the first RRH to the BBU, of an acknowledgement message ACK on correct reception of one or more packets of I/Q samples, the acknowledgement message comprising the sequence identifier of the one or more packets of I/Q samples,
- the fourth step (304) comprises the removal, by the BBU, of the packets of I/Q samples stored in memory that correspond to received acknowledgement messages ACK, and the retransmission of those packets of I/Q samples stored in memory for which no acknowledgement message ACK has been received by a given time;
and wherein, when the implemented acknowledgement mechanism comprises a negative acknowledgement mechanism:
- the second step (302) comprises the transmission, by the first RRH to the BBU, of a negative acknowledgement message NACK when a packet of I/Q samples is erroneous or missing, the negative acknowledgement message NACK comprising the sequence identifier of the packet of I/Q samples,
- the fourth step (304) comprises the removal, by the BBU, of those packets of I/Q samples stored in memory for which no negative acknowledgement message NACK has been received by a given time, and the retransmission of those packets of I/Q samples for which a negative acknowledgement message NACK has been received.

5. The method for transmitting data according to one of claims 3 and 4, wherein, when the number of packets not acknowledged or the number of packets negatively acknowledged in the fourth step (304) is higher than a threshold in a given period, the retransmission of a packet of I/Q samples and the subsequent transmissions are carried out by a second RRH.

6. The method for transmitting data according to one of the preceding claims, wherein the reception of data in the communication network comprises:
- a first step (501) during which a RRH (203) receiving a RF analogue signal, generates stores in memory and transmits to a BBU (201) one or more corresponding packets of I/Q samples,
- a second step (502) during which the BBU acknowledges the receipt of the one or more packets of I/Q samples to the RRH via at least one acknowledgement mechanism among a positive acknowledgement mechanism and a negative acknowledgement mechanism,
- a third step (503) during which the BBU extracts data from the packets of I/Q samples correctly received,
- a fourth step (504) during which the RRH removes from its memory or resends the one or more packets of I/Q samples transmitted in the first step (501) of the method depending on the acknowledgements received from the BBU following the second step (502) of the method.

7. The method for transmitting data according to one of the preceding claims, wherein, when the implemented acknowledgement mechanism comprises a positive acknowledgement mechanism:
- the second step (502) comprises the transmission, by the BBU to the RRH, of an acknowledgement message ACK on correct reception of one or more packets of I/Q samples, the acknowledgement message comprising the sequence identifier of the one or more packets of I/Q samples,
- the fourth step (504) comprises the removal, by the RRH, of the packets of I/Q samples stored in memory that correspond to received acknowledgement messages ACK, and the retransmission of those packets of I/Q samples stored in memory for which no acknowledgement message ACK has been received by a given time;
and wherein, when the implemented acknowledgement mechanism comprises a negative acknowledgement mechanism:
- the second step (502) comprises the transmission, by the BBU to the RRH, of a negative acknowledgement message NACK when a packet of I/Q samples is erroneous or missing, the negative acknowledgement message NACK comprising the sequence identifier of the packet of I/Q samples,
- the fourth step (304) comprises the removal, by the RRH, of those packets of I/Q samples stored in memory for which no negative acknowledgement message NACK has been received by a given time, and the retransmission of those packets of I/Q samples for which a negative acknowledgement message NACK has been received.

8. The method for transmitting data according to one of claims 6 and 7, wherein, in the fourth step (504), the retransmission of a packet of I/Q samples is carried out via another digital communication link.

9. The method for transmitting data according to one of the preceding claims, wherein the RF communication system furthermore comprises a piece of equipment (502) for supervising the BBU and RRH, the supervising equipment being configured to associate RRH and BBU for the transmission of data.

10. The method for transmitting data according to the preceding claim, wherein the supervising equipment (502) supervises the queues (403) of the one or more BBU and of the multiple RRH.

11. The method for transmitting data according to one of the preceding claims, wherein the digital communication link for the transmission of the packets of I/Q samples between BBU and RRH uses a communication protocol among the standards CPRI, eCPRI, OBSAI and NGFI.

12. The method for transmitting data according to claim 11, wherein the communication protocol used is the eCPRI protocol, the *"eCPRI Message Type"* field of which is used to identify the packets of I/Q samples.

13. The method for transmitting data according to one of the preceding claims, wherein the digital communication links between BBU and RRH or between RRH and BBU are of constant throughput.

14. A radiofrequency (RF) communication system (200, 500) for a telecommunication network, the radiofrequency communication system comprising:
- at least one piece of equipment (201, 601), referred to as the BBU, comprising a memory, this piece of equipment being configured to generate in-phase and quadrature phase digital samples, referred to as I/Q samples, from data to be emitted, and to reconstruct received data from I/Q samples,
- a plurality of pieces of equipment (203, 211, 213), referred to as RRH, comprising a memory, these pieces of equipment being configured to generate and transmit an RF analogue signal on the basis of I/Q samples, and to generate I/Q samples from a received RF analogue signal,
- digital communication links for transmitting IQ samples between the one or more BBU and the multiple RRH,
each BBU being configured to:
- send data in the telecommunication network by generating I/Q samples corresponding to the data to be sent, and, by transmitting them over a digital communication link to one of the RRH so that it transmits a corresponding RF analogue signal, and
- receive data of the telecommunication network over a digital communication link from one of the RRH in the form of I/Q samples extracted from an RF analogue signal,
the one or more BBU and the multiple RRH being configured to exchange I/Q samples organised in the form of packets of I/Q samples marked by a sequence identifier, and to implement a mechanism for acknowledging packets exchanged between them,
the radiofrequency communication system being **characterised in that** it is configured to modify the RRH that is the recipient of the packets of I/Q samples transmitted by each BBU depending on the state of the acknowledgements of the packets of I/Q samples.
